# EUROPÄISCHE PATENTSCHRIFT

(11) **EP 1 728 668 B1**
(45) Veröffentlichungstag und Bekanntmachung des Hinweises auf die Patenterteilung: **07.11.2012**
(21) Anmeldenummer: 06011098.8
(22) Anmeldetag: 30.05.2006
(51) Int. Cl.: B60K 11/08

(54) **Vorrichtung zur Regulierung eines Luftstroms zur Motorkühlung**
Device for regulating an air stream for engine cooling
Dispositif de régulation d'un flux d'air pour le refroidissement d'un moteur

(30) Priorität: 30.05.2005 DE 102005025081; 12.01.2006 DE 102006001797
(43) Veröffentlichungstag der Anmeldung: 06.12.2006
(73) Patentinhaber: Behr GmbH & Co. KG, 70469 Stuttgart (DE)
(72) Erfinder: Harich, Martin, Dipl.-Ing., 71638 Ludwigsburg (DE); Pantow, Eberhard, Dr.-Ing., 71696 Möglingen (DE); Spieth, Michael, Dipl.-Ing. (BA), 72810 Gomaringen (DE)
(74) Vertreter: Grauel, Andreas

(56) Entgegenhaltungen:
- DE-A1- 3 836 374
- DE-A1- 4 304 336
- DE-A1- 10 235 192
- DE-A1- 10 306 158
- US-A- 3 777 808

## Beschreibung

Die Erfindung betrifft eine Vorrichtung zur Regulierung eines Luftstroms zur Motorkühlung nach dem Oberbegriff des Anspruchs 1.

Beim Bau von Kraftfahrzeugen mit Verbrennungsmotoren besteht die Problematik, dass der Luftdurchsatz durch einen gegebenen Hauptkühler des Fahrzeugmotors in sämtlichen Fahrsituationen ausreichend sein muss. Im Zuge der Gewichtsersparnis und insbesondere im Zuge von Forderungen eines verbesserten Fußgänger-Aufprallschutzes wird allgemein die Verkleinerung von Hauptkühlern unter Beibehaltung der Wärmetauscherleistung angestrebt. Dies erfordert eine Optimierung der Luftdurchströmung der Tauscherfläche bei möglichst allen Betriebszuständen. Hierzu ist bekannt, eine Oberfläche des Wärmetauschers mit einer Lüfterhaube abzudecken, wobei in einem Bereich der Lüfterhaube ein elektrisch angetriebener Lüfter und in einem anderen Bereich der Lüfterhaube öffnungsfähige Klappen vorgesehen sind. Die öffnungsfähigen Klappen können je nach Ausführung als Staudruckklappen oder als aktiv betätigbare Klappen ausgebildet sein. In dem Fall, in dem keinerlei Klappen vorgesehen sind, wird die Luftströmung bei höheren Geschwindigkeiten behindert, da ein Überblasen des laufenden Lüfters stattfindet und kein zusätzlicher Luftmassenstrom durch Staudruckbeaufschlagung stattfinden kann. Bei Vorsehen von -zumeist horizontal angeordneten-Staudruckklappen ergibt sich zumindest im teilgeöffneten Betrieb ein hoher Widerstand, wobei Rückströmungen bzw. Rezirkulationen von erwärmter Luft in den Ansaugbereich des Lüfters zumindest teilweise vorhanden sind. Solche Rezirkulationen verringern grundsätzlich den Wirkungsgrad des Wärmetauschers. Sowohl im Falle passiver Staudruckklappen als auch im Falle aktiv gesteuerter Klappen sind daher regelmäßig Limitierungen des Wirkungsgrades durch starke Effekte von Rezirkulationen gegeben.

Eine Vorrichtung zur Regulierung eines Luftstroms mit den Merkmalen des Oberbegriffs des Anspruchs 1 ist bekannt aus US-3777808.

Es ist die Aufgabe der Erfindung, eine Vorrichtung zur Regulierung eines Luftstroms zur Motorkühlung anzugeben, bei der ein verbesserter Wirkungsgrad des Wärmetauschers in zumindest einem Betriebszustand eines Kraftfahrzeugs vorliegt.

Diese Aufgabe wird für eine eingangsgenannte Vorrichtung erfindungsgemäß mit den kennzeichnenden Merkmalen des Anspruchs 1 gelöst.

Durch das selektierbare Öffnen des ersten Öffnungsabschnitts, der von dem Lüfterelement beabstandet ist, ist es möglich in einem Teillastbereich eine fahrtwindbedingte zusätzliche Durchströmung des Wärmetauschers zu erreichen, wobei zugleich die Gefahr von Rezirkulationen der durch diesen ersten Öffnungsabschnitt geströmten Luft in das Lüfterelement hinein erheblich verringert ist. Zugleich wird aufgrund der Möglichkeit der selektierbaren Öffnung des zweiten Öffnungsabschnitts eine dem Stand der Technik entsprechende, einem höheren Lastbereich wie etwa Volllast zugeordnete großflächigere Durchströmung ermöglicht. Insgesamt ist der Wirkungsgrad des Wärmetauschers daher bei gemittelter Betrachtung über sämtliche Betriebszustände durch die erfindungsgemäße Vorrichtung verbessert.

Zur Optimierung des Bauraums und der Luftströmung ist das Lüfterelement bevorzugt in saugender Anordnung anbringbar.

In einer ersten bevorzugten Ausführungsform weist das Abdeckelement eine Mehrzahl von separat ansteuerbaren Klappen auf, so dass die Öffnung der verschiedenen Öffnungsabschnitte in Stufen erfolgen kann, zum Beispiel indem jede der Klappen einer Stufe entspricht.

Im Interesse einer mechanisch sicheren und aerodynamisch vorteilhaften Ausbildung sind die Klappen dabei jeweils als zweiteilige Faltklappen ausgebildet.

Zur Anpassung an die bei der Mehrzahl der modernen Kraftfahrzeuge vorhandenen niedrigen Bauräume sind die Klappen dabei vorteilhaft seitlich neben dem Lüfterelement angeordnet, wobei die Bewegungsachsen der Klappen jeweils im Wesentlichen senkrecht orientiert sind.

Weiterhin bevorzugt ist zwischen einem dem Lüfterelement abgewandten Ende der Tauscherfläche und dem ersten Öffnungsabschnitt ein permanenter luftdurchlässiger Abschnitt vorgesehen, um die Anpassung an einen Teillastbetrieb zu optimieren. Besonders bevorzugt ist hierbei im Bereich des permanent luftdurchlässigen Abschnitts ein Luftleitelement zur Verringerung einer Rezirkulation vorgesehen. Dieses kann etwa ein Richtungsleitblech und/oder ein sperrendes Leitblech sein. Solche Luftleitelemente können auch ganz allgemein zwischen der Tauscherfläche und den Klappenelementen angeordnet sein.

Zur Erlangung einer besonders guten Anpassung an verschiedene Fahrzustände beträgt die Anzahl der separat ansteuerbaren Klappen mindestens drei.

In einer zweiten bevorzugten Ausführungsform der erfindungsgemäßen Vorrichtung ist das Abdeckelement ein insbesondere stufenlos verschiebbares, im Wesentlichen flächiges Element. Insbesondere vorteilhaft ist das Abdeckelement ein elastisches Rollo, welches bevorzugt in horizontaler Richtung bewegbar ist. Insgesamt ist durch das Vorsehen eines solchen im allgemeinen stufenlos verstellbaren Rollos als Abdeckelement eine besonders genaue Anpassung der Freigabe der Tauscherfläche in Abhängigkeit verschiedener Fahrzustände ermöglicht. Zweckmäßig ist derjenige Bereich, in dem das Rollo zuerst die Tauscherfläche freigibt, maximal von dem Lüfterelement entfernt, um die Gefahr der Rezirkulation, die insbesondere bei niedrigen Geschwindigkeiten besteht, gering zu halten.

Bei der Erfindung umfasst zumindest ein Teil des Abdeckelements eine Mehrzahl von bewegbaren Klappen, wobei der erste Öffnungsabschnitt von zumindest einer ersten der Klappen ausgebildet ist, und wobei zumindest zwei der Klappen über eine gemeinsame Steuermechanik zueinander verzögert öffnungsfähig sind. Hierdurch wird auf einfache und kostengünstige Weise die Anzahl erforderlicher Krafteinleitungseinheiten verringert.

Bevorzugt sind dabei die Mehrzahl von Klappen als insbesondere separate bauliche Einheit in einem Rahmen aufgenommen, wodurch das Abdeckelement zumindest teilweise als separates Modul ausbildbar ist.

Weiterhin bevorzugt umfaßt die Steuermechanik eine Schiene mit zumindest zwei unterschiedlich ausgeformten Kulissenführungen, wobei jede der Kulissenführungen einer der Klappen zugeordnet ist. Die unterschiedlichen Kulissenführungen ermöglichen eine einfache, zuverlässige und flachbauende Möglichkeit der Realisierung einer geeigneten Steuermechanik,

Besonders bevorzugt ist eine Antriebskraft zur Bewegung der Klappen dabei auf nur einer Endseite der Klappen einleitbar, wodurch eine aufwendige Mechanik zur Übertragung der Kraft auf die andere Endseite oder eine weitere separate Krafteinleitungseinheit obsolet ist.

Weitere Vorteile und Merkmale ergeben sich aus den nachfolgend beschriebenen Ausführungsbeispielen sowie aus den abhängigen Ansprüchen.

Nachfolgend werden drei Ausführungsbeispiele einer erfindungsgemäßen Vorrichtung beschrieben und anhand der anliegenden Zeichnungen näher erläutert.
- Fig. 1: zeigt eine schematische Ansicht einer erfindungsgemäßen Vorrichtung von oben, wobei ausgehend von einem vollständig geschlossenen Abdeckelement mehrere Zustände zunehmender Öffnung des Abdeckelements dargestellt sind.
- Fig. 2: zeigt eine Abwandlung der Vorrichtung aus Fig. 1.
- Fig. 3: zeigt eine schematische Ansicht einer zweiten Ausführungsform einer erfindungsgemäßen Vorrichtung von oben.
- Fig. 4: zeigt die Vorrichtung aus Fig. 3 von vorne.
- Fig. 5: zeigt eine räumliche Ansicht eines Abdeckelements eines dritten Ausführungsbeispiels einer erfindungsgemäßen Vorrichtung.
- Fig.6: zeigt das Abdeckelement aus Fig. 5 aus einer anderen Perspektive.
- Fig. 7: zeigt eine schematische Draufsicht auf eine Steuerschiene des Abdeckelements aus Fig. 5.
- Fig. 8: zeigt eine räumliche Ansicht einer einzelnen Klappe des Abdeckelements aus Fig. 5.
- Fig. 9a: zeigt eine Steuerschiene mit einer geöffneten Klappe, wobei die Position der Klappe fixiert ist.
- Fig. 9b: zeigt eine Steuerschiene mit einer geschlossenen Klappe, wobei die Klappe in einer Position fixiert ist, in der die Klappe den Öffnungsabschnitt der Tauscherfläche gegenüber einem Luftdurchtritt abdichtet.

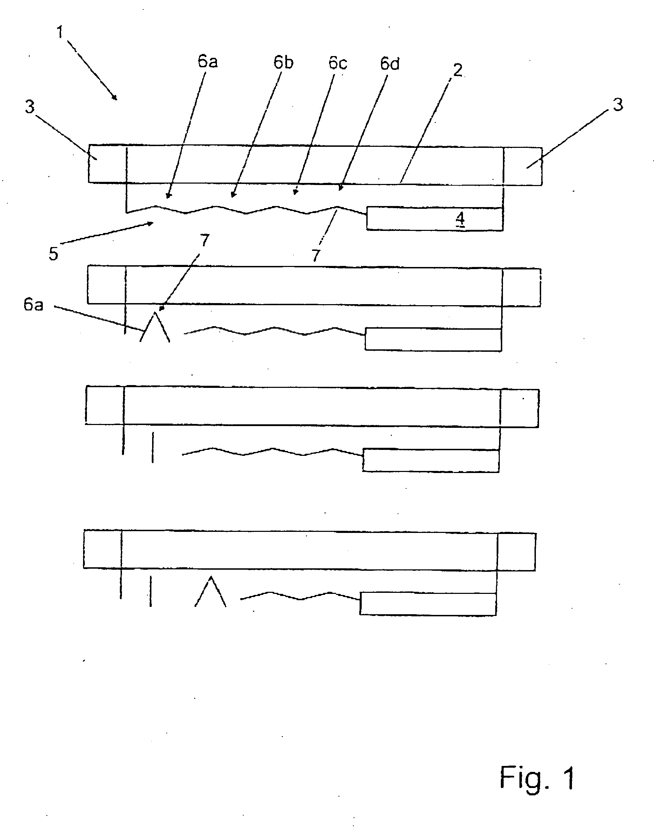

Fig. 1 zeigt einen Wärmetauscher 1, der eine Tauscherfläche 2 hat, wobei der Wärmetauscher 1 lediglich über die Tauscherfläche 2 von Luft durchströmbar ist. Im Bereich dieser Durchströmung bzw. der tauscherfläche sind die (nicht dargestellten) Tauscherrohre angeordnet, welche ausgehend von seitlichen Sammelbereichen 3 von einer Kühlmittelflüssigkeit durchströmt werden, so dass die Wärme der Kühlmittelflüssigkeit an die durchströmende Luft abgegeben wird.

Ein elektrisch angetriebenes Lüfterelement 4 ist in einem seitlichen Bereich der Tauscherfläche 2 saugend vor dem Wärmetauscher 1 angeordnet. In Querrichtung des Wärmetauschers 1 erstreckt sich das Lüfterelement 4 in etwa über ein Drittel der Länge der Tauscherfläche 2.

Neben dem Lüfterelement 4 ist ein Abdeckelement 5 vorgesehen, welches den Teil der Tauscherfläche 2, der nicht von dem Lüfterelement 4 überdeckt ist, abdeckt. Insbesondere hält das Abdeckelement 5 das Lüfterelement 4 in einer entsprechenden Ausnehmung nach Art einer an sich bekannten Lüfterhaube.

Das Abdeckelement 5 hat vier Klappen 6a, 6b, 6c und 6d, die jeweils nach Art einer zweiteiligen, eine Klappachse 7 umfassenden Faltklappe ausgebildet sind, wobei die Klappachse 7 sich in die Zeichnungsebene hinein und somit bezüglich der Einbaulage der Vorrichtung in senkrechter Richtung erstreckt. Jede der Klappen 6a-6d kann separat geöffnet werden. Dies erfolgt auf an sich bekannte Weise mittels jeweiliger Aktuatoren bzw. Stellglieder.

Es kann auch eine Steuermechanik vorgesehen sein, die lediglich von einem Aktuator betätigt wird und mehrere Klappen wie dargestellt sequentiell nacheinander öffnet.

Die Erfindung funktioniert hinsichtlich der mehreren in Fig. 1 sequentiell von oben nach unten dargestellten Öffnungszustände des Abdeckelements 5 wie folgt:

In geschlossener Position sämtlicher der Klappen 6a-6d (obere Abildung) saugt der Lüfter 4 Luft durch den Wärmetauscher 1, wobei durch die im wesentlichen vollständige Überdeckung der Tauscherfläche 2 weitgehend ausgeschlossen ist, dass von dem Lüfter 4 austretende, erwärmte Luft ihren Weg zurück in den Lüftereintritt findet. Eine wirkungsgradsenkende Rezirkulation von Luft ist daher weitgehend vermieden. Die vollständig geschlossene Position des Abdeckelements 5 liegt zumeist in einem Leerlaufzustand des Fahrzeugs vor, in dem kein Fahrtwind auftritt, so dass der gesamte Luftdurchsatz von dem Lüfterelement 4 geleistet wird.

Wird in einem Teillastbereich des Fahrzeugsmotors bei gewisser, im allgemeinen geringer Fahrtgeschwindigkeit eine höhere Tauscherleistung erforderlich, so wird zunächst das gemäß Fig. 1 maximal von dem Lüfterelement 4 entfernte erste Klappenelement 6a geöffnet, wobei aufgrund der Ausbildung der Klappenelemente die Öffnung auch eine nur teilweise sein kann. Durch die Öffnung des ersten Klappenelements 6a wird ein erster Öffnungsabschnitt der Tauscherfläche für den Luftdurchtritt freigegeben, wobei dieser erste Öffnungsabschnitt im Vergleich zu den anderen Klappenelementen 6b-6d die größte Entfernung von dem Lüfterelement 4 hat. In diesem Betriebszustand ist das Lüfterelement 4 zumeist noch eingeschaltet, so dass die Vermeidung einer Rezirkulation gewünscht ist. Durch den größeren Abstand des ersten Klappenelements 6a im Vergleich zu den weiteren Klappenelementen 6b-6d ist eine Rezirkulation verhindert oder besonders klein gehalten.

Bei weiter zunehmender Last, die zumeist mit zunehmender Fahrtgeschwindigkeit einher geht, werden sukzessiv auch die weiteren Klappenelemente 6b-6d geöffnet, was in der Zeichnung Fig. 1 lediglich bis zu einer Teilöffnung des zweiten Klappenelements 6b dargestellt ist.

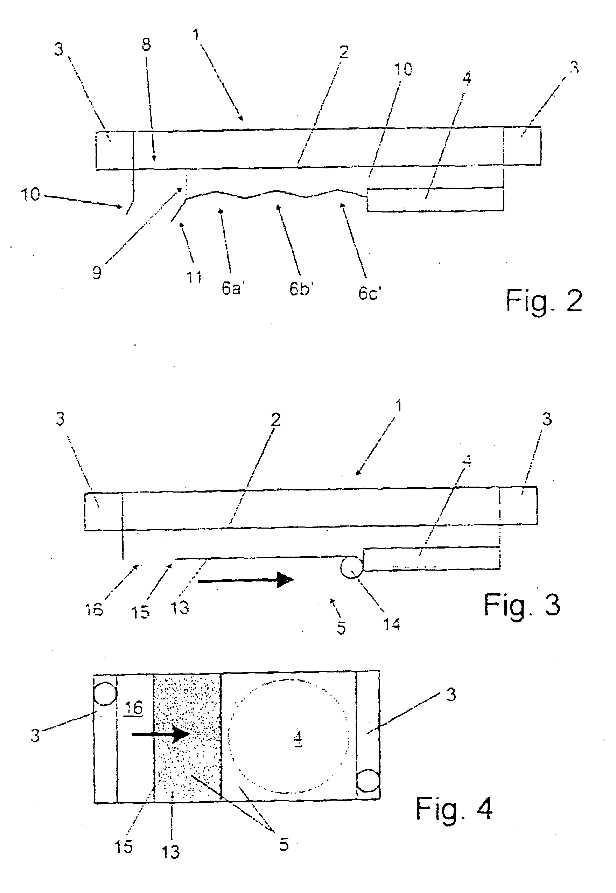

Fig. 2 zeigt eine Abwandlung der Ausführungsform aus Fig. 1, wobei zwischen einem Rand 2a der Tauscherfläche 2 und einer ersten, maximal von dem Lüfterelement 4 beabstandeten Faltklappe 6a' ein permanent luftdurchlässiger Abschnitt 8 vorgesehen ist und wobei insgesamt nur drei Faltklappen 6a', 6b', 6c' vorgesehen sind. Dies kann zur Feinanpassung oder auch zur Vermeidung einer übermäßig großen Anzahl von Klappen gewünscht sein.

Vorliegend reicht der gegebene Abstand des ersten Klappenelements 6a' von dem Lüfterelement 4 aus, um bei einem ausschließlichen Öffnen des ersten Klappenelements 6a' im Zuge eines Teillastbetriebs eine zumindest erhebliche Reduzierung einer Rezirkulation zu bewirken. Zur weiteren Verbesserung ist vorliegend zudem eine Trennwand 9 vorgesehen, die sich von der Tauscherfläche 2 bis zu einem dem Lüfterelement 4 abgewandten Ende des Klappenelements 6a' erstreckt, so dass bei geschlossenen Klappenelementen 6a'-6c' in Verbindung mit der Trennwand 9 ein weitgehend geschlossenes und nur über das Lüfterelement 4 zugängliches Volumen 10 zwischen Abdeckelement 5 und Tauscherfläche 2 vorhanden ist. Eine zu der Trennwand 9 ergänzende oder altemative Maßnahme zur Verringerung einer möglichen Rezirkulation sind Luftleitelemente 10, 11 im Ausgangsbereich des permanent luftdurchlässigen Abschnitts 8. Diese Luftleitelemente lenken die durch den Bereich 8 strömende Luft von dem Lüfterelement 4 weg.

Bei dem zweiten erfindungsgemäßen Ausführungsbeispiel gemäß Fig. 3 und Fig. 4 ist das Abdeckelement 5 nicht als diskrete Anzahl von starren Klappenelementen ausgebildet, sondern als Rollo mit einer flächigen und elastischen Bahn 13, die um eine Rolle 14 aufwickelbar ist. Die Rolle 14 ist dabei angrenzend an das Lüfterelement 4 angeordnet, so dass ein Ende 15 der elastischen Bahn 13 in einem vollständig geschlossenen Rollozustand (nicht dargestellt) einen maximalen Abstand von dem Lüfterelement 4 aufweist. Eine Freigabe der Tauscherfläche 2 mittels des Rollos ist stufenlos möglich. In den Abbildungen Fig. 3 und Fig. 4 befindet sich das Rollo jeweils in einem teilweise geöffneten Zustand, in dem ein erster Öffnungsabschnitt 16 freigegeben ist, so dass der gezeigte Zustand einem Teillastbereich des Fahrzeugmotors bei zumeist geringem Fahrtwind entspricht. Dadurch, dass der erste Öffnungsabschnitt 16 bedingt durch die zwischen ihm und dem Lüfterelement 4 noch vorhandene Restfläche des Rollos einen Mindestabstand von dem Lüfterelement 4 aufweist, ist eine Rezirkulation von Luft, die den Bereich 16 durchströmt hat, in das Lüfterelement 4 hinein weitgehend vermieden. Ein zweiter Öffnungsabschnitt zur weiteren, insbesondere vollständigen Freigabe der Tauscherfläche 2 kann durch ein z.B. vollständiges Aufrollen des Rollos erreicht werden. Auf diese Weise kann auch ein optimaler Luftdurchtritt etwa für einen Volllastbereich erzielt werden.

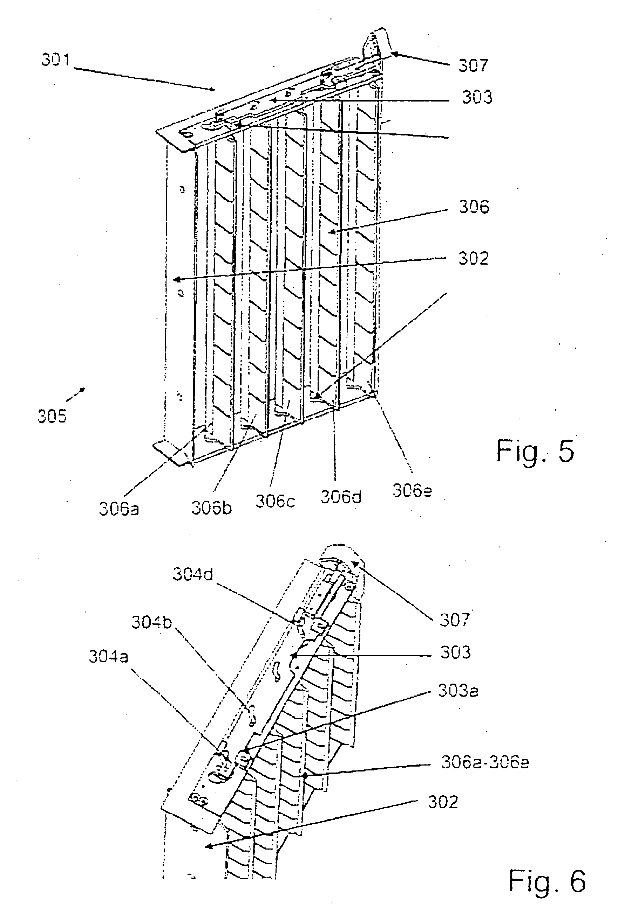

Im Falle des dritten bevorzugten Ausführungsbeispiels gemäß Fig. 5 bis Fig. 8 ist ein Abdeckelement 305 dargestellt, welches als bauliche Einheit oder als Modul aufgebaut ist. Ein weiteres Abdeckelement im Sinne der Patentansprüche kann etwa ein angrenzender Rahmen für den (nicht dargestellten) Lüfter sein.

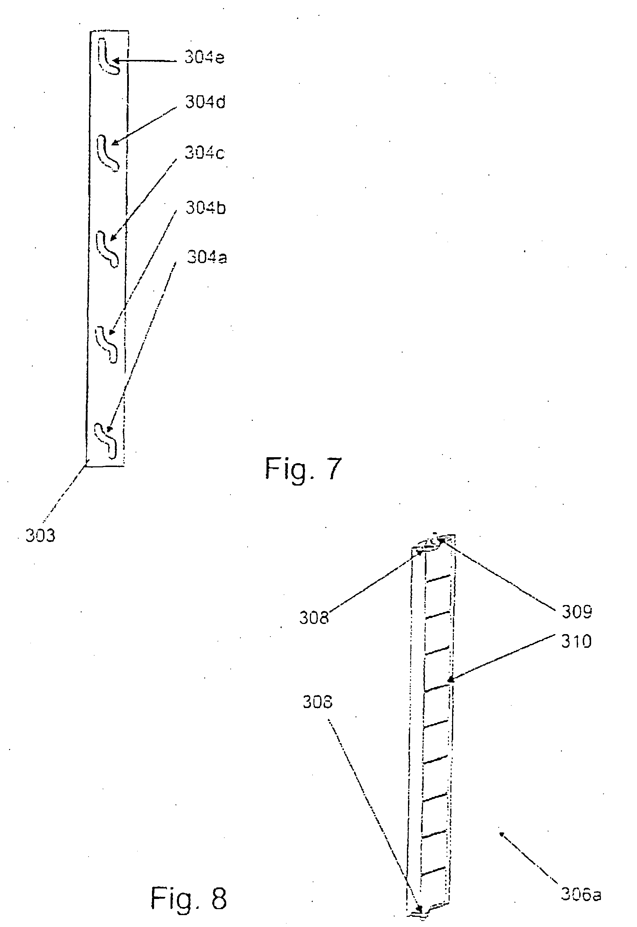

Das Abdeckelement des dritten Ausführungsbeispiels umfaßt fünf jeweils bewegbare Klappen 306a-306e, die parallel zueinander in einem starren Rahmen 302 über jeweils endseitige Drehzapfen 308 (siehe Fig. 8) drehbar gelagert sind. Je nach Drehstellung liegt somit eine geöffnete, teilweise geöffnete oder geschlossene Stellung der Klappe in dem Rahmen 302 vor. Jede der Klappen hat auf der einen Endseite einen zu dem Drehzapfen 308 versetzten Betätigungszapfen 309, über den eine kraftunterstützte Verstellung der jeweiligen Klappe erfolgen kann.

Auf der Rahmenseite des Betätigungszapfens 309 ist eine Steuerschiene 303 in Führungsblöcken 303a linear verschiebbar in dem Rahmen 302 geführt. Endseitig der Schiene 303 ist diese über ein Gestänge mit einem nicht dargestellten, in einer Halterung 307 festlegbaren linearen Aktuator verbunden, mittels dessen sich eine Stellung der Schiene 303 relativ zu dem Rahmen 302 einstellen läßt. Als Aktuator sind dabei sämtliche bekannte und geeignete Antriebsvorrichtungen denkbar.

Die Steuerschiene 303 hat fünf Durchbrechungen 304a, 304b, 304c, 304d, 304e (siehe Fig. 7), die einen gewundenen Verlauf nach Art einer Kulissenführung aufweisen. In jede der Kulissenführungen 304a-304e greift einer der Betätigungszapfen 309 der fünf Klappen 306a-306e ein.

Aus der maßstabsgerechten Darstellung der Kulissen in Fig. 7 ist ersichtlich, dass jede der Kulissen 304a-304e insgesamt die gleiche Länge in Bewegungsrichtung der Schiene und die gleiche Breite senkrecht zur Bewegungsrichtung der Schiene aufweist. Dagegen besteht ein jeweiliger Unterschied zwischen den Kulissen darin, dass ein kurviger Teil auf jeweils unterschiedlicher relativer Position in Längsrichtung vorgesehen ist.

Ausgehend von der gezeigten geöffneten Position der Klappen 306a-306e wird zum Zwecke des Schließen des Abdeckelements 305 die Schiene 303 kraftunterstützt in ihrer Längsrichtung verschoben. Hierdurch wird zunächst die Klappe 306e geschlossen, wogegen die übrigen Klappen sich im Moment der ersten Bewegung der Schiene 303 noch nicht bewegen. Noch im Zuge der Schließbewegung der Klappe 303e wird dann bedingt durch die Ausformung der Kulisse 304d die Klappe 306d bewegt, bis zuletzt die erste Klappe 306a geschlossen wird. Entsprechend wird ausgehend von der (nicht dargestellten) geschlossenen Stellung zuerst die Klappe 306a teilweise geöffnet, bevor die Bewegung der nächsten Klappe 306b beginnt.

Jede der Kulissen 304a-304e hat einen parallel zu der Längsrichtung der Schiene 303 verlaufenden Abschnitt, der einer unveränderten Stellung der jeweiligen Klappe während einer Bewegung der Schiene 303 zugeordnet ist. Dieser Leerweg kann zum Beispiel bei 18mm Gesamtweg der Steuerschiene 6mm betragen. Es sind jedoch auch andere Verhältnisse von Leerweg zu Gesamtweg denkbar, je nachdem, wie stark die Bewegung der einzelnen Klappen zueinander verzögert sein soll.

Im vorliegenden Beispiel sind die Klappen jeweils baugleich. In einer weiteren Optimierung des Abdeckelements können sie jedoch auch jede für sich in Abhängigkeit von ihrer Position aerodynamisch optimiert sein. Die Klappen 306a-306e sind als Staudruckklappen ausgebildet und senkrecht orientiert. Durch die senkrechte Orientierung fällte die Massenwirkung weg. Der Staudruck kompensiert den Saugdruck eines bevorzugt saugend angeordneten Lüfters zunehmend mit der Fahrtgeschwindigkeit, so dass im geeigneten Moment des Öffnens zumeist nur eine geringe Kraft aufgewendet werden muß, um im wesentlichen die Reibungskräfte der Steuermechanik 301 zu überwinden.

Aus dem genannten Grund ist es mit geringem Aufwand möglich, die Mechanik so leichtgängig auszulegen, dass die Steuermechanik wie dargestellt nur an einer Endseite der Klappen angreifen muß. Dies ermöglicht einen einfachen Aufbau mit nur einem einzigen Aktuator und insbesondere ohne eine zusätzliche Mechanik zur Kraftübergabe auf die gegenüberliegende Seite.

In günstiger aerodynamischer Ausgestaltung weisen die Klappen zudem Rippen 310 auf, die einer verbesserten Leitung der die Klappen umströmenden Luft und gegebenenfalls einer Geräuschminderung dienen.

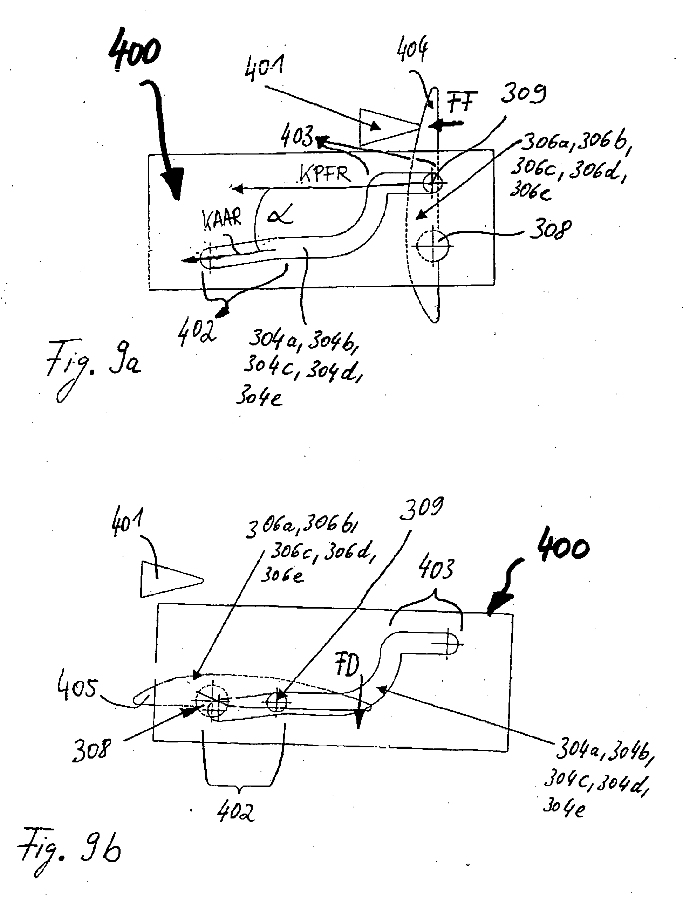

**Figur 9a** zeigt eine Steuerschiene 400 mit zumindest einer geöffneten Klappe 306a, 306b, 306c, 306d, 306e wobei die Position der zumindest einen Klappe 306a, 306b, 306c, 306d, 306e fixiert ist. Gleiche Merkmale sind mit den gleichen Bezugszeichen versehen wie in den vorherigen Figuren.

Die Steuerschiene 400 weist zumindest eine Kulissenführung 304a, 304b, 304c, 304d, 304e auf, die in die Steuerschiene 400 eingebracht ist. In der Steuerschiene wird ein Betätigungszapfen 309 zumindest einer Klappe 306a, 306b, 306c, 306d, 306e geführt, wobei dadurch die zumindest eine Klappe 306a, 306b, 306c, 306d, 306e von einer Klappenposition 404 in zumindest eine zweite Klappenposition 405 überführt wird bzw. werden kann,

Im dargestellten Ausführungsbeispiel befindet sich die zumindest eine Klappe 306a, 306b, 306c, 306d, 306e in der ersten Klappenposition 404. In dieser Klappenposition kann Luft durch zumindest einen Öffnungsabschnitt der Tauschfläche des zumindest einen Wärmetauschers strömen. In der Klappenposition 404 befindet sich der Betätigungszapfen 309 in einem Klappenpositionsfixierungsabschnitt 403 der Kulissenführung 304a, 304b, 304c, 304d, 304e. In einer anderen Ausführungsform kann die Fixierung der zumindest einen Klappe 306a, 306b, 306c, 306d, 306e durch ein Fixierelement 401 noch verbessert werden. Das Fixierelement 401, insbesondere ein Anschlag, übt dabei zumindest eine Kraft auf die zumindest eine Klappe 306a, 306b, 306c, 306d, 306e aus, dies Kraft erzeugt eine Gegenkraft, die Fixierkraft FF, welche auf das Fixierelement 401 wirkt und denselben Betrag aber die entgegengesetzte Richtung hat wie die Kraft auf die Klappe.

Aufgrund des Klappenpositionsfixierungsabschnitts 403 und/oder aufgrund des Fixierelements 401 wird das Spiel der Klappe 306a, 306b, 306c, 306d, 306e reduziert und diese können nicht mehr flattern. Ein Flattern der zumindest einen Klappe 306a, 306b, 306c, 306d, 306e bewirkt einen erhöhten Strömungswiderstand der Klappe und führt zum Verschleiß der zumindest einen Klappe. Fernern wird aufgrund des Klappenpositionsfixierungsabschnitts 403 und/oder aufgrund des zumindest einen Fixierelements 401 Flattergeräusche der zumindest einen Klappe verhindert.

**Figur 9b** zeigt eine Steuerschiene 400 mit einer geschlossenen Klappe 306a, 306b, 306c, 306d, 306e, wobei die Klappe 306a, 306b, 306c, 306d, 306e in einer zweiten Klappenposition 405 fixiert ist, in der die Klappe 306a, 306b, 306c, 306d, 306e den Öffnungsabschnitt der Tauscherfläche gegenüber einem Luftdurchtritt abdichtet, somit wird ein Luftdurchtritt durch den Öffnungsabschnitt verhindert. Gleiche Merkmale sind mit den gleichen Bezugszeichen versehen wie in den vorherigen Figuren.

Im dargestellten Ausführungsbeispiel befindet sich die zumindest eine Klappe 306a, 306b, 306c, 306d, 306e in der zweiten Klappenposition 405. In dieser Klappenposition kann keine Luft durch den zumindest einen Öffnungsabschnitt der Tauschfläche des zumindest einen Wärmetauschers strömen. In der Klappenposition 405 befindet sich der Betätigungszapfen 309 in einem Klappenabdichtabschnitt 402 der Kulissenführung 304a, 304b, 304c, 304d, 304e.

In einer anderen Ausführungsform wird die Fixierung der zumindest einen Klappe 306a, 306b, 306c, 306d, 306e in der Abdichtposition 405 durch das Fixierelement 401 und/oder durch ein weiteres nicht dargestelltes Fixierelement noch verbessert. Beim Abdichten übt die zumindest eine Klappe 306a, 306b, 306c, 306d, 306e eine Abdichtkraft FD auf zumindest eine weitere Klappe und/oder auf zumindest ein nicht dargestelltes Rahmenelement aus.

Aufgrund des Klappenabdichtabschnitts 402 und/oder aufgrund des Fixierelements 401 erhöht sich die Dichtkraft FD. Dies reduziert die Leckage, d.h. den Luftdurchtritt durch den Tauscheröffnungsabschnitt. Damit erhöht sich die abgeführte Wärmeleistung im Stand, insbesondere bei niedrigen Fahrzeuggeschwindigkeiten. Zusätzlich wird das Spiel der Klappe 306a, 306b, 306c, 306d, 306e reduziert oder sogar beseitigt. Der Verschleiß der Klappe 306a, 306b, 306c, 306d, 306e wird reduziert und Klappergeräusche werden unterbunden.

Der zumindest eine Klappenabdichtabschnitt 402 mit der Klappenabdichtabschnittsrichtung KAAR weist einen Winkel α zur Klappenpositionierfixierungsabschnittrichtung KPFR des Klappenpositionierfixierungsabschnitt 403 auf. Der Winkel α nimmt Werte zwischen 0° und 90°, insbesondere zwischen 0° und 50°, insbesondere zwischen 0° und 45°, insbesondere zwischen 0° und 40°, insbesondere zwischen 5° und 30°, insbesondere zwischen 7° und 20° an.

## Patentansprüche

1. Vorrichtung zur Regulierung eines Luftstroms zur Motorkühlung, umfassend
ein über einem Teil einer Tauscherfläche (2) eines luftdurchströmbaren Wärmetauschers (1) anbringbares Lüfterelement (4), und
ein über einem weiteren Teil der Tauscherfläche (2) anbringbares Abdeckelement (5), wobei das Abdeckelement (5) sich von dem Lüfterelement (4) bis zu einem Ende der Tauscherfläche (2) erstreckt und wobei das Abdeckelement (5) zum Durchlass von Luft zumindest teilweise selektierbar öffnungsfähig ist, wobei
ein erster Öffnungsabschnitt (6a, 6a', 16) des Abdeckelements (5) selektierbar öffnungsfähig ist, welcher zur Vermeidung übermäßiger Rezirkulation einen Mindestabstand von dem Lüfterelement (4) aufweist, **dadurch gekennzeichnet, dass** zumindest ein zweiter Öffnungsabschnitt (6b-6d, 6b',6c') gegenüber dem ersten Öffnungsabschnitt selektierbar öffnungsfähig ist, der im Wesentlichen an das Lüfterelement (4) angrenzt, wobei das Abdeckelement (305) eine Mehrzahl von bewegbaren Klappen (306a, 306b, 306c, 306d, 306e) umfasst, wobei der erste Öffnungsabschnitt von zumindest einer ersten der Klappen (306a) ausgebildet ist, und wobei zumindest zwei der Klappen über eine gemeinsame Steuermechanik (301) zueinander verzögert öffnungsfähig sind.

2. Vorrichtung nach Anspruch 1, **dadurch gekennzeichnet, dass** das Lüfterelement (4) in saugender Anordnung angeordnet ist.

3. Vorrichtung nach Anspruch 1 oder 2, **dadurch gekennzeichnet, dass** das Abdeckelement (5) eine Mehrzahl von separat ansteuerbaren Klappen (6a-6d, 6a'-6c') umfasst.

4. Vorrichtung nach Anspruch 3, **dadurch gekennzeichnet, dass** die Klappen (6a-6d, 6a'-6c') als jeweils zweiteilige Faltklappen ausgebildet sind.

5. Vorrichtung nach einem der Ansprüche 3 oder 4, **dadurch gekennzeichnet, dass** die Klappen (6a-6d, 6a'-6c') seitlich neben dem Lüfterelement (4) angeordnet sind, wobei Bewegungsachsen (7) der Klappen jeweils im wesentlichen senkrecht orientiert sind.

6. Vorrichtung nach einem der Ansprüche 3 bis 5, **dadurch gekennzeichnet, dass** zwischen einem dem Lüfterelement (4) abgewandten Ende der Tauscherfläche (2) und dem ersten Öffnungsabschnitt (6a') ein permanent luftdurchlässiger Abschnitt (8) vorgesehen ist.

7. Vorrichtung nach Anspruch 6, **dadurch gekennzeichnet, dass** im Bereich des permanent luftdurchlässigen Abschnitts (8) ein Luftleitelement (9, 10, 11) zur Verringerung einer Rezirkulation vorgesehen ist.

8. Vorrichtung nach einem der Ansprüche 3 bis 7, **dadurch gekennzeichnet, dass** die Anzahl der separat ansteuerbaren Klappen (6a-6d, 6a'-6c') mindestens drei beträgt.

9. Vorrichtung nach Anspruch 1 oder 2, **dadurch gekennzeichnet, dass** das Abdeckelement (5) ein insbesondere stufenlos verschiebbares, im wesentlichen flächiges Element (13) ist.

10. Vorrichtung nach Anspruch 9, **dadurch gekennzeichnet, dass** das Abdeckelement (5) ein elastisches Rollo ist.

11. Vorrichtung nach Anspruch 9 oder 10, **dadurch gekennzeichnet, dass** das Rollo (5) im wesentlichen in horizontaler Richtung bewegbar ist.

12. Vorrichtung nach einem der vorhergehenden Ansprüche, **dadurch gekennzeichnet, dass** die Mehrzahl von Klappen (306a, 306b, 306c, 306d, 306e) als insbesondere separate bauliche Einheit in einem Rahmen (302) aufgenommen sind.

13. Vorrichtung nach einem der vorhergehenden Ansprüche, **dadurch gekennzeichnet, dass** die Steuermechanik (301) eine Schiene (303) mit zumindest zwei unterschiedlich ausgeformten Kulissenführungen (304a, 304b, 304c, 304d, 304e) umfaßt, wobei jede der Kulissenführungen einer der Klappen (306a, 306b, 306c, 306d, 306e) zugeordnet ist.

14. Vorrichtung nach einem der vorhergehenden Ansprüche, **dadurch gekennzeichnet, dass** eine Antriebskraft zur Bewegung der Klappen (306a, 306b, 306c, 306d, 306e) auf nur einer Endseite der Klappen einleitbar ist.

15. Vorrichtung nach einem der vorhergehenden Ansprüche, **dadurch gekennzeichnet, dass** die Vorrichtung zumindest ein Element (401) zur Positionsfixierung zumindest einer Klappe (306a, 306b, 306c, 306d, 306e) in zumindest einer Klappenposition (404, 405) und/oder zur Klappenabdichtung aufweist.

16. Vorrichtung nach einem der vorhergehenden Ansprüche, **dadurch gekennzeichnet, dass** zumindest eine Kulissenführung (304a, 304b, 304c, 304d, 304e) zumindest abschnittsweise als Klappenabdichtabschnitt (402) und/oder als Klappenpositionsfixierungsabschnitt (403) ausgebildet ist.

## Claims

1. A device for regulating an air stream for engine cooling purposes, comprising
a fan element (4), which can be provided over a portion of an exchanger surface (2) of a heat exchanger (1) through which air can flow, and a cover element (5), which can be provided over another portion of the exchanger surface (2), wherein the cover element (5) extends from the fan element (4) to an end of the exchanger surface (2), and wherein the cover element (5) can be selectively opened at least partially for air to pass through, wherein a first opening section (6a, 6a', 16) of the cover element (5) can be selectively opened and has a minimum distance from the fan element (4) to prevent excessive circulation, **characterized in that** at least one second opening section (6b-6d, 6b', 6c') can be selectively opened in relation to the first opening section, said second section essentially adjoining the fan element (4),
wherein the cover element (305) comprises a plurality of movable flaps (306a, 306b, 306c, 306d, 306e), wherein the first opening section is formed by at least one first of the flaps (306a), and wherein at least two of the flaps can be opened delayed from one another via a joint control mechanism (301).

2. The device according to claim 1, **characterized in that** the fan element (4) is arranged in a suctioning arrangement.

3. The device according to claim 1 or 2, **characterized in that** the cover element (5) comprises a plurality of separately controllable flaps (6a-6d, 6a'-6c').

4. The device according to claim 3, **characterized in that** the flaps (6a-6d, 6a'-6c') are each designed as two-piece folding flaps.

5. The device according to either claim 3 or 4, **characterized in that** the flaps (6a-6d, 6a'-6c') are arranged laterally next to the fan element (4), wherein axis of movements (7) of the flaps are respectively oriented substantially perpendicularly.

6. A device according to any one of claims 3 to 5, **characterized in that** a permanently air-permeable section (8) is provided between an end of the exchanger surface (2) facing away from the fan element (4) and the first opening section (6a').

7. The device according to claim 6, **characterized in that** an air guide element (9, 10, 11) is provided in the region of the permanently air-permeable section (8) so as to reduce recirculation.

8. A device according to any one of claims 3 to 7, **characterized in that** the number of separately controllable flaps (6a-6d, 6a'-6c') is at least three.

9. The device according to claim 1 or 2, **characterized in that** the cover element (5) is in particular a continuously displaceable, substantially planar element (13).

10. The device according to claim 9, **characterized in that** the cover element (5) is an elastic roller shutter.

11. The device according to claim 9 or 10, **characterized in that** the roller shutter (5) can be moved substantially in the horizontal direction.

12. A device according to any one of the preceding claims, **characterized in that** the plurality of flaps (306a, 306b, 306c, 306d, 306e) is accommodated in a frame (302) in particular as a separate structural unit.

13. A device according to any one of the preceding claims, **characterized in that** the control mechanism (301) comprises a rail (303) having at least two differently shaped slotted guide systems (304a, 304b, 304c, 304d, 304e), wherein each slotted guide system is associated with one of the flaps (306a, 306b, 306c, 306d, 306e).

14. A device according to any one of the preceding claims, **characterized in that** a driving force for moving the flaps (306a, 306b, 306c, 306d, 306e) can be introduced only on one end face of the flaps.

15. A device according to any one of the preceding claims, **characterized in that** the device comprises at least one element (401) for fixing the position of at least one flap (306a, 306b, 306c, 306d, 306e) in at least one flap position (404, 405) and/or for sealing the flap.

16. A device according to any one of the preceding claims, **characterized in that** at least one slotted guide system (304a, 304b, 304c, 304d, 304e) is designed at least in some sections as a flap sealing section (402) and/or as a flap position fixing section (403).

## Revendications

1. Dispositif de régulation d'un flux d'air pour le refroidissement d'un moteur, comprenant :
un élément de ventilateur (4) pouvant être monté sur une partie d'une surface d'échangeur (2) d'un échangeur de chaleur (1) pouvant être traversé par de l'air, et
un élément de recouvrement (5) pouvant être monté sur une autre partie de la surface d'échangeur (2), où l'élément de recouvrement (5) s'étend depuis l'élément de ventilateur (4) jusqu'à une extrémité de la surface d'échangeur (2) et où l'élément de recouvrement (5) peut s'ouvrir de façon au moins partiellement sélectionnable pour le passage d'air, où une première section d'ouverture (6a, 6a', 16) de l'élément de recouvrement (5) peut s'ouvrir de façon sélectionnable, laquelle première section d'ouverture présente, pour éviter une recirculation excessive, une distance minimale par rapport à l'élément de ventilateur (4),
**caractérisé en ce qu'**au moins une deuxième section d'ouverture (6b-6d, 6b',6c') faisant face à la première section d'ouverture peut s'ouvrir de façon sélectionnable, deuxième section d'ouverture qui est pratiquement contiguë à l'élément de ventilateur (4), où l'élément de recouvrement (305) comprend une pluralité de volets mobiles (306a, 306b, 306e, 306d, 306e), où la première section d'ouverture est constituée d'au moins l'un des premiers volets (306a), et où au moins deux des volets peuvent s'ouvrir de façon retardée l'un par rapport à l'autre, grâce à un mécanisme de commande commun (301).

2. Dispositif selon la revendication 1, **caractérisé en ce que** l'élément de ventilateur (4) est disposé dans un agencement aspirant.

3. Dispositif selon la revendication 1 ou 2, **caractérisé en ce que** l'élément de recouvrement (5) comprend une pluralité de volets (6a-6d, 6a'-6c') pouvant être commandés séparément.

4. Dispositif selon la revendication 3, **caractérisé en ce que** les volets (6a-6d, 6a'-6c') sont configurés à chaque fois comme des volets pliables en deux parties.

5. Dispositif selon l'une des revendications 3 ou 4, **caractérisé en ce que** les volets (6a-6d, 6a'-6c') sont disposés latéralement à côté de l'élément de ventilateur (4), où des axes de mouvement (7) des volets sont orientés à chaque fois essentiellement de façon verticale.

6. Dispositif selon l'une quelconque des revendications 3 à 5, **caractérisé en ce qu'**il est prévu une section (8) perméable à l'air de façon permanente, entre une extrémité de la surface d'échangeur (2), placée à l'opposé de l'élément de ventilateur (4), et la première section d'ouverture (6a').

7. Dispositif selon la revendication 6, **caractérisé en ce qu'**il est prévu, dans la zone de la section (8) perméable à l'air de façon permanente, un élément déflecteur (9, 10, 11) servant à diminuer une recirculation.

8. Dispositif selon l'une quelconque des revendications 3 à 7, **caractérisé en ce que** le nombre des volets (6a-6d, 6a'-6c') pouvant être commandés séparément est au moins égal à trois.

9. Dispositif selon la revendication 1 ou 2, **caractérisé en ce que** l'élément de recouvrement (5) est un élément (13) pratiquement plan, en particulier mobile de façon continue.

10. Dispositif selon la revendication 9, **caractérisé en ce que** l'élément de recouvrement (5) est une jalousie enroulable élastique.

11. Dispositif selon la revendication 9 ou 10, **caractérisé en ce que** la jalousie enroulable (5) est mobile essentiellement dans le sens horizontal.

12. Dispositif selon l'une quelconque des revendications précédentes, **caractérisé en ce que** la pluralité de volets (306a, 306b, 306c, 306d, 306e) est logée dans un cadre (302) servant en particulier d'ensemble structurel distinct.

13. Dispositif selon l'une quelconque des revendications précédentes, **caractérisé en ce que** le mécanisme de commande (301) comprend un rail (303) comportant au moins deux guides de coulisse (304a, 304b, 304c, 304d, 304e) conçus de façon différente, où chacun des guides de coulisse est associé à l'un des volets (306a, 306b, 306c, 306d, 306e).

14. Dispositif selon l'une quelconque des revendications précédentes, **caractérisé en ce qu'**une force d'entraînement servant au mouvement des volets (306a, 306b, 306c, 306d, 306e) peut être introduite seulement sur un côté d'extrémité des volets.

15. Dispositif selon l'une quelconque des revendications précédentes, **caractérisé en ce que** le dispositif présente au moins un élément (401) servant à fixer en position au moins un volet (306a, 306b, 306c, 306d, 306e) dans au moins une position de volet (404, 405) et / ou à assurer l'étanchéité des volets.

16. Dispositif selon l'une quelconque des revendications précédentes, **caractérisé en ce qu'**au moins un guide de coulisse (304a, 304b, 304c, 304d, 304e) est configuré, au moins partiellement, comme une section d'étanchéité (402) des volets et / ou comme une section de fixation en position (403) des volets.
